# FASCICULE DE BREVET EUROPEEN

(11) **EP 4 065 854 B1**
(45) Date de publication et mention de la délivrance du brevet: **25.09.2024**
(21) Numéro de dépôt: 20820053.5
(22) Date de dépôt: 26.11.2020
(51) Int. Cl.: F16D 13/69

(54) **MODULE D'EMBRAYAGE**
KUPPLUNGSMODUL
CLUTCH MODULE

(30) Priorité: 29.11.2019 FR 1913567
(43) Date de publication de la demande: 05.10.2022
(73) Titulaire: VALEO EMBRAYAGES, 80009 Amiens (FR)
(72) Inventeur: DOLE, Arnaud, 95892 CERGY PONTOISE (FR); PERRY, Benoit, 95892 CERGY PONTOISE CEDEX (FR)
(74) Mandataire: Valeo Powertrain Systems
(86) Numéro de dépôt international: PCT/EP2020/083469
(87) Numéro de publication internationale: WO 2021/105266

(56) Documents cités:
- DE-A1- 102008 063 662
- DE-A1- 102008 063 662
- DE-A1- 102016 211 192
- DE-A1- 102016 211 192
- US-A- 2 738 864
- US-A- 2 738 864
- US-A1- 2003 150 686
- US-A1- 2003 150 686
- US-A1- 2009 277 742

## Description

Le domaine de la présente invention est celui des modules d'embrayages, notamment pour transmission de véhicules automobiles.

De façon connue un embrayage pour transmettre le couple d'un arbre d'entrée à un arbre de sortie comporte des ensembles multi-disques comprenant un empilement alterné de plusieurs disques d'embrayage et de plusieurs disques de friction agencés pour coopérer entre eux. La demande US 2003150686 A1 divulgue en particulier des disques de friction ondulés.

Il est connu des mécanismes d'embrayage comprenant un porte-disques d'entrée de couple et au moins un embrayage. Le porte-disques est couplé en rotation à un premier arbre, appelé arbre moteur, afin de fournir un couple moteur à l'embrayage. Le mécanisme d'embrayage est assemblé avec un système d'actionnement pour l'actionnement de l'embrayage.

L'embrayage est configuré pour sélectivement coupler ou séparer une liaison mécanique entre l'arbre moteur à un second arbre, appelé arbre de transmission. Le système d'actionnement permet de piloter le mécanisme d'embrayage pour le positionner dans l'une ou l'autre de ces positions. A cet effet, le système d'actionnement est agencé pour générer un effort axial permettant de positionner l'embrayage dans une configuration embrayée ou dans une configuration débrayée. Cet effort axial est transmis à l'embrayage par l'intermédiaire d'un organe de transmission de force. Cet organe de transmission de force déplace des premiers éléments de friction de l'embrayage par rapport à des deuxièmes éléments de friction, afin de configurer l'embrayage dans l'une ou l'autre de la configuration embrayée ou de la configuration débrayée.

De manière connue, les premiers éléments de friction de l'embrayage sont couplés en rotation au porte-disques d'entrée de couple afin de transmettre un couple depuis l'arbre moteur vers ces premiers éléments de friction. Les deuxièmes éléments de friction de l'embrayage sont couplés en rotation à l'arbre de transmission par l'intermédiaire d'un porte-disques de sortie, ce porte-disques de sortie étant couplé en rotation à l'arbre de transmission. Ainsi, lorsque les premiers éléments de friction de l'embrayage sont mis en contact avec ses deuxièmes éléments de friction, l'arbre de transmission est couplé en rotation à l'arbre moteur sous l'effet de l'effort généré par le système d'actionnement.

Pour réduire le couple de trainée généré en configuration débrayée par le frottement entre les premiers éléments de friction et les deuxièmes éléments de friction il est connu, par exemple de la demande US2009277742A de positionner entre deux premiers éléments de friction un ressort d'entretoisement. Un autre exemple de module d'embrayage avec des éléments à ressort pour limiter le couple d'entraînement est connu aussi de la demande US 2 738 864 A.

Il existe cependant un besoin pour réduire encore le couple de trainée.

Par ailleurs le positionnement des ressort d'entretoisement de l'art antérieur peut conduire à un mauvais contact, en particulier axial, entre les premiers éléments de friction et les deuxièmes éléments de friction. Ainsi un décalage radial entre l'application de la charge du ressort d'entretoisement et l'appui de l'organe de transmission de la force de friction peut générer une mise en cône des éléments de friction.

En effet, des ressort d'entretoisement peuvent provoquer sous leur charge une mise en cône et une mise en ondulation des premiers éléments ou deuxièmes éléments de friction.

L'invention vise à remédier, au moins en partie, aux inconvénients ci-dessus.

A cet effet, la présente invention propose un module d'embrayage mobile en rotation autour d'un axe de rotation et comprenant
- au moins un ensemble multi-disques d'un embrayage, l'ensemble multi-disques comportant plusieurs disques d'embrayage et de plusieurs disques de friction agencés pour coopérer entre eux.
- au moins un ressort d'entretoisement positionné axialement entre deux disques d'embrayage, notamment deux disques d'embrayage adjacents, ou entre deux disques de friction, notamment deux disques de friction adjacents,
- un porte-disques d'entrée de couple
- et un organe de transmission de force configuré pour exercer une pression sur l'ensemble multi-disques au niveau d'une première zone d'appui, et d'au moins une deuxième zone d'appui,
le au moins un ressort d'entretoisement étant positionné radialement entre la première zone d'appui et la au moins deuxième zone d'appui.

Grâce à l'invention l'organe d transmission de force appuie sur les éléments de friction radialement de part et d'autre de la charge du ressort d'entretoisement. La mise en cône des éléments de friction est ainsi évitée.

Dans la suite de la description et des revendications, on utilisera à titre non limitatif et afin d'en faciliter la compréhension, les termes « axial » et « axialement » correspondant à une direction parallèle à l'axe de rotation du module d'embrayage alors que « radial »et « radialement » correspondant à une orientation orthogonale à ladite orientation axiale.

Les termes « avant » ou « arrière » doivent être compris selon la direction axiale définie précédemment, dans le sens de transmission du couple et les termes « intérieur / interne » ou « extérieur / externe » par rapport à l'axe de rotation et suivant l'orientation radiale.

L'au moins deuxième zone d'appui est distincte de la première zone d'appui. Elles sont radialement séparées par une distance non nulle.

La première zone d'appui est en particulier située radialement en regard des disques d'embrayage et des disques de friction.

La deuxième zone d'appui est notamment située radialement en regard des disques d'embrayage. Dans une variante, la deuxième zone d'appui est notamment située radialement en regard des disques de friction.

Les disques d'embrayage et les disques de friction définissent une zone de friction. Les disques d'embrayage et les disques de friction sont en particulier agencés pour coopérer entre eux au niveau de ladite zone dite friction.

Avantageusement la première zone d'appui est localisée au niveau de la zone de friction.

La zone de friction et la deuxième zone d'appui sont distinctes. De préférence elles ne se superposent pas totalement ni partiellement. Ainsi le deuxième appui se situe radialement en dehors de la zone de friction. La deuxième zone d'appui se situe par exemple radialement à l'extérieur de la zone de friction. Dans une autre variante, la deuxième zone d'appui se situe radialement à l'intérieur de la zone de friction.

L'invention peut présenter l'une ou l'autre des caractéristiques décrites ci-dessous combinées entre elles ou prises indépendamment les unes des autres :
- la zone de friction est localisée à la fois entre un diamètre intérieur et un diamètre extérieur des disques d'embrayages et entre un diamètre intérieur et un diamètre extérieur des disques de friction.
- la zone de friction présente sensiblement une forme circulaire, notamment d'anneau circulaire.

la au moins deuxième zone d'appui est située radialement au niveau d'un élément de fixation, notamment d'une dent, ou une entretoise de fixation d'un disque d'embrayage o
la au moins deuxième zone d'appui est située radialement au niveau d'un élément de fixation, notamment d'une dent, ou une entretoise de fixation d'un disque de friction.
au moins un disque d'embrayage, voire tous les disque d'embrayage, sont positionnés en dehors de la ou l'une au moins des deuxièmes zone d'appui
au moins un disque de friction, voire tous les disques de friction sont positionnés en dehors de la ou l'une au moins des deuxièmes zone d'appui.
   - la première zone d'appui et/ou la deuxième zone d'appui sont agencées pour coopérer avec un premier, respectivement deuxième, appui de l'organe de transmission de force
   - la première zone d'appui et/ou la deuxième zone d'appui sont agencées pour coopérer avec un premier, respectivement deuxième, contre-appui du module d'embrayage.
le premier appui et le premier contre-appui sont, au moins en partie, en regard
   - le premier appui, et/ou premier contre-appui est localisé au niveau de la zone de friction.
   - le deuxième appui et le deuxième contre-appui sont en particulier en regard.
   - l'organe de transmission de force comporte une couronne formant au moins en partie le premier ou deuxième appui. Ladite couronne peut être continue ou discontinue. De façon alternative ou complémentaire la couronne peut être cannelée. Dans une autre variante particulière l'organe de transmission de force comporte au moins un doigt formant au moins en partie le premier ou deuxième appui, en particulier à son extrémité. Le au moins un doigt traverse par exemple le porte-disques d'entrée de couple notamment au niveau d'au-moins une ouverture du porte-disques d'entrée. L'ouverture est en particulier pratiquée sur un flanc radial du porte-disques d'entrée.
selon les variantes l'organe de transmission de force peut comporter entre 3 et 60 doigts, en particulier entre 12 et 10 doigts, voire entre 15 et 30 doigts, préférentiellement 20.
le premier et/ou deuxième appui est réalisé directement de matière avec l'organe de transmission de l'effort, par exemple par moulage, pressage, roulage ou tout autre procédé connu de l'homme du métier.
le premier et/ou deuxième appui est rapporté de matière avec l'organe de transmission de l'effort, par exemple par soudage, collage ou tout autre procédé connu de l'homme du métier.
lesdits appuis et/ou contre-appui permettent de communiquer l'effort qui transmet le couple.
lesdits appuis et/ou contre-appui se situent en regard d'un disque d'extrémité. Sous l'action de l'organe de transmission de force le disque d'extrémité se déplace axialement.
le disque d'extrémité comporte au moins une excroissance axiale. Celle-ci est orientée en direction de l'organe de transmission de force.
l'excroissance axiale comporte une couronne, continue ou discontinue la première et/ou la deuxième zone d'appui est située radialement au niveau de ladite excroissance axiale. Ladite excroissance axiale est ainsi agencée pour coopérer avec le premier appui ou le deuxième appui de l'organe de transmission de force
ladite excroissance axiale peut comporter au moins une patte l'excroissance axiale comporte une série de pattes, en particulier réparties angulairement de façon régulière autour de l'axe de rotation, par exemple entre 3 et 60 pattes, en particulier entre 12 et 10 pattes, voire entre 15 et 30 pattes, préférentiellement 20
le ressort d'entretoisement peut prendre la forme d'une rondelle ressort, ou de toute solution alternative connue de l'homme du métier.
le ressort d'entretoisement se situe radialement à l'extérieur de la zone de friction. Dans une autre variante, le ressort d'entretoisement se situe radialement à l'intérieur de la zone de friction.
le ressort d'entretoisement est notamment positionné selon une orientation axiale. La position dudit ressort d'entretoisement définit radialement un rayon intérieur et un rayon extérieur dudit ressort. Dans un exemple de réalisation, le deuxième appui, et/ou contre-appui, est localisé radialement au-delà du rayon extérieur du ressort d'entretoisement. Dans une variante, le deuxième appui, et/ou contre-appui, est localisé radialement en deçà du rayon intérieur du ressort d'entretoisement.
le porte-disques d'entrée de couple comporte une denture coopérant avec l'ensemble multi-disques. De façon avantageuse, la deuxième zone d'appui est en particulier disposée radialement au niveau de la denture.
le ressort d'entretoisement est disposé radialement à l'intérieur de la de la denture du porte-disques d'entrée de couple.
l'excroissance axiale du disque d'extrémité est disposée radialement dans la denture du porte-disques d'entrée de couple

Le module peut comporter plusieurs embrayages, en particulier deux ou trois embrayages.

Au moins un des embrayages, voire tous les embrayages, peuvent être un embrayage humide. Dans une variante au moins un des embrayages est un embrayage à sec.

Selon une variante, le module d'embrayage peut être une partie d'un mécanisme à double embrayage, d'architecture radiale ou axiale.

D'autres caractéristiques et avantages de l'invention apparaîtront encore au travers de la description qui suit d'une part, et de plusieurs exemples de réalisation données à titre indicatif et non limitatif en référence aux dessins schématiques annexés d'autre part, sur lesquels :
- la Figure 1 illustre une représentation en coupe d'un module d'embrayage selon un premier mode de réalisation de l'invention ;
- la Figure 2a illustre schématiquement en coupe une première variante de l'invention ,
- la Figure 2b représente un détail du mode de réalisation de la figure 2a,
- les Figures 3 à 9 illustrent schématiquement en coupe différentes variantes de l'invention.

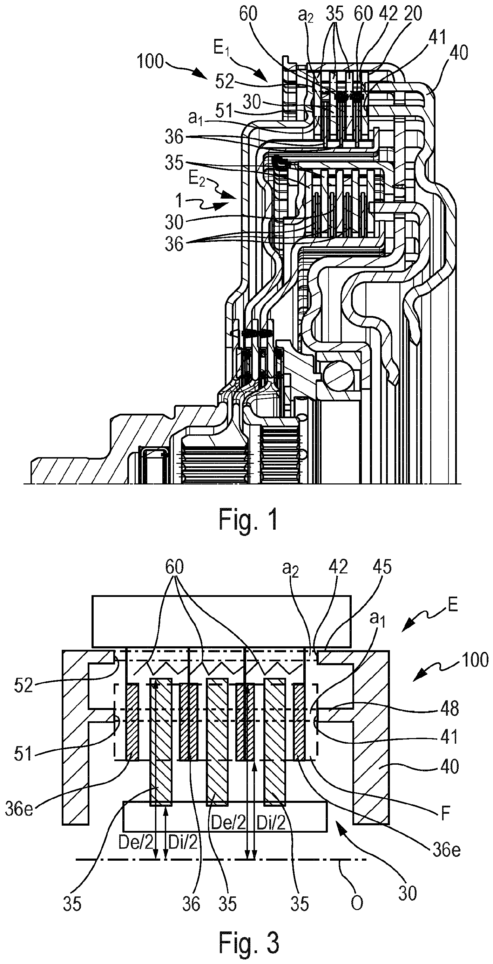

La Figure 1 illustre un mécanisme à double embrayage 1 d'architecture radiale fonctionnant dans un environnement humide, dans un état assemblé, comprenant un module d'embrayage 100 selon un premier mode de réalisation de l'invention.

Le mécanisme 1 est formé des embrayages E1 et E2. Chaque embrayage comporte un ensemble multi-disques 30 formé de plusieurs disques d'embrayage 35 et de plusieurs disques de friction 36 empilés alternativement et agencés pour coopérer entre eux, un porte-disques 20 d'entrée de couple, un organe de transmission de force 40. Cet organe de transmission de force déplace disques d'embrayage 35 et de plusieurs disques de friction 36 afin de configurer l'embrayage correspondant dans l'une ou l'autre de la configuration embrayée ou de la configuration débrayée.

L'organe de transmission de force 40 de l'embrayage E1 est configuré pour exercer une pression sur l'ensemble multi-disques 30 correspondant au niveau d'une première zone d'appui *a₁* et au niveau d'une deuxième zone d'appui *a₂*.

Pour cet embrayage un ressort d'entretoisement 60 est positionné axialement entre deux disques d'embrayage 35 pour chaque paire de disques d'embrayage adjacents.

Chaque ressort d'entretoisement est positionné radialement entre la première zone d'appui *a₁* et la deuxième zone d'appui *a₂*.

L'embrayage E1 forme ainsi un module 100 selon l'invention.

Dans une variante non représentée, l'embrayage E2, voire les deux embrayages E1 et E2 sont définis selon l'invention.

Nous allons maintenant détailler différents modes de réalisation particuliers.

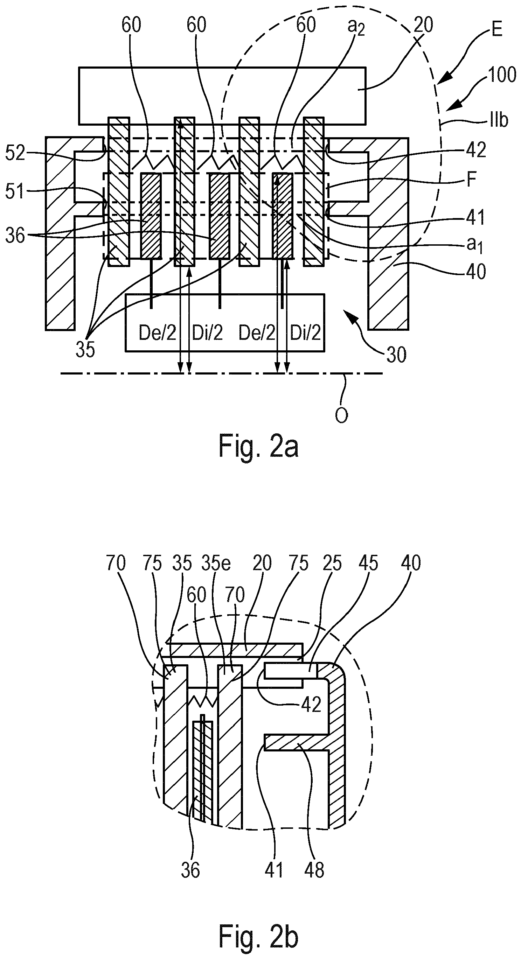

Comme illustré sur la Figure 2a et les figures suivantes, les disques d'embrayage 35 et les disques de friction 36 sont agencés pour coopérer entre eux au niveau d'une dite zone friction *F*.

La zone de friction *F* est localisée à la fois entre le diamètre intérieur *Di* et le diamètre extérieur *De* des disques d'embrayages 35 et entre le diamètre intérieur *Di* et le diamètre extérieur *De* des disques de friction 36.

Les ressorts d'entretoisement 60 sont positionnés à l'extérieur de la zone de friction *F*.

Sur les exemples illustrés, la première zone d'appui *a1* est localisée au niveau de la zone de friction *F* alors que la deuxième zone d'appui a2 se situe radialement en-dehors de la zone de friction *F*.

Dans les modes de réalisation des Figures 2, 3, 6, 7 et 9 la deuxième zone d'appui a2 se situe radialement à l'extérieur de la zone de friction *F*.

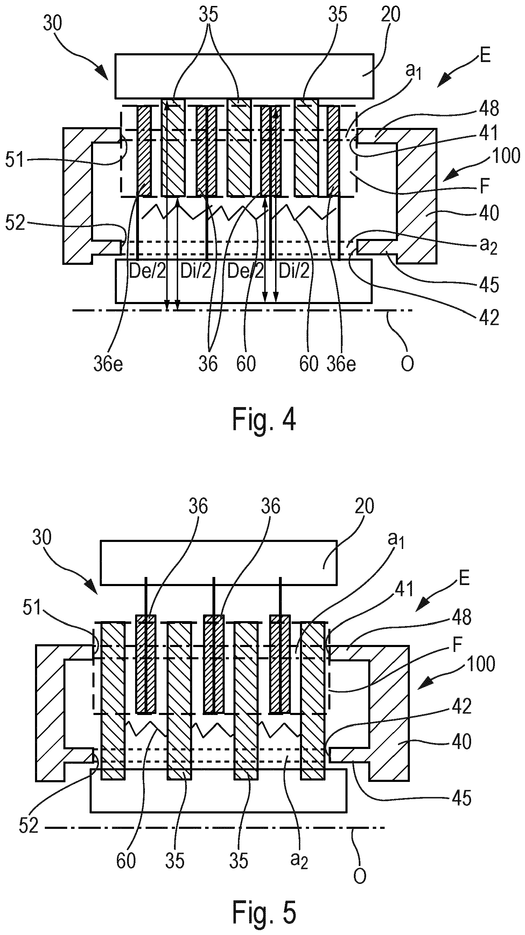

Dans les modes de réalisation des Figures 4 et 5 la deuxième zone d'appui a2 se situe radialement à l'intérieur de la zone de friction *F*.

Selon les modes de réalisation illustrés, la première zone d'appui *a₁* et la deuxième zone d'appui *a₂* sont agencées pour coopérer avec un appui 41, respectivement 42, de l'organe de transmission de force 40. Les première et deuxième zones d'appui *a₁* et *a₂* sont notamment agencées pour coopérer avec un contre-appui 51, respectivement 52, du module d'embrayage 100.

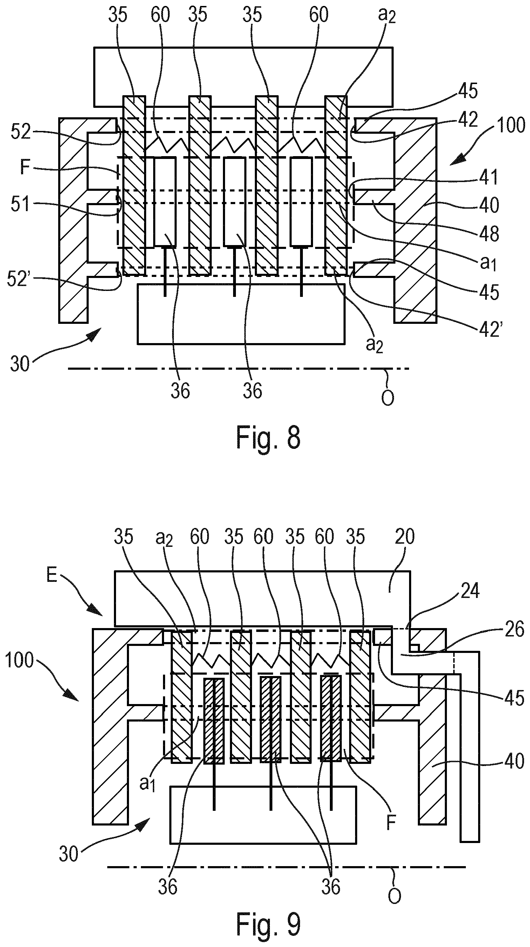

La Figure 8 illustre un mode particulier comportant plusieurs deuxièmes zones d'appui a2 situées radialement respectivement à l'extérieur et à l'intérieur de la zone de friction *F*.

La Figure 9 illustre un autre mode particulier dans lequel un doigt 45 de l'organe de transmission de force 40 traverse le porte-disques 20. Dans l'exemple illustré le doigt 45 traverse le porte-disques d'entrée 20 de couple au niveau d'une ouverture 24 pratiquée sur un flanc radial 26 du porte-disques d'entrée.

Dans les modes de réalisation des Figures 2a à 6 ainsi que celui de la Figure 8 les premiers appuis 41 sont formés sur une couronne 48 de l'organe de transmission de force 40. La couronne 48 est circulaire dans les exemples illustrés. La couronne 48 est selon les variantes continue ou discontinue. Elle est par exemple cannelée.

Dans les modes de réalisation des Figures 2a à 5 ainsi que ceux de la Figure 8 et de la Figure 9 les premiers appuis 41 sont formés par au moins un doigt 45 de l'organe de transmission de force 40.

Dans l'exemple de réalisation de la Figure 2a les disques d'embrayage 35 de l'ensemble multi-disques 30 sont solidaires en rotation du porte disques extérieur, et les disques de friction 36 de l'ensemble multi-disques 30 sont solidaires du porte disques intérieur. Le module d'embrayage comporte un ressort d'entretoisement 60 entre chaque paire de disques d'embrayage 35 adjacents. On entend par disques d'embrayage adjacents deux disques d'embrayage qui se suivent dans l'empilement des disques de l'ensemble multidisque. Deux disques d'embrayage adjacents sont séparés par un disque de friction.

Dans cet exemple, comme divulgué dans le détail Ilb illustré Fig 2b, la deuxième zone d'appui *a₂* est disposée radialement au niveau d'une denture 25 de porte-disques 20 d'entrée de couple. La denture 25 est agencée pour coopérer avec des éléments de fixation 70, ici des dents 75 du disque d'embrayage d'extrémité 35e Autrement dit, la deuxième zone d'appui *a₂* est ici située radialement au niveau d'au moins un élément de fixation 70, ici au niveau de dents 75, des disques d'embrayage 35.

Tous les disques de friction 36 sont positionnés en dehors de la deuxième zone d'appui a2.

Avantageusement les disques friction 36 comportent une garniture de friction sur chaque face. Dans les modes de réalisation des Figures 3 et 4, les disques friction d'extrémité 36e comportent une garniture de friction uniquement sur une face.. Le module d'embrayage comporte ici un ressort d'entretoisement 60 entre chaque paire de disques de friction 36e-36 ou 36-36 adjacents. Deux disques de friction sont dits adjacents lorsqu'ils se suivent dans l'empilement des disques. Deux disques de friction adjacents sont séparés par un disque d'embrayage.

Dans les exemples illustrés Figures 3 et 4, la deuxième zone d'appui *a₂* est située radialement au niveau d'au moins un élément de fixation 70, ici au niveau de dents 75, des disques de friction 36. Dans une autre variante l'élément de fixation est sous forme d'une entretoise de fixation.

Tous les disque d'embrayage 36 sont positionnés en dehors de la deuxième zone d'appui a2.

Dans l'exemple de réalisation de la Figure 3 les disques d'embrayage 35 de l'ensemble multi-disques 30 sont fixés au porte disques intérieur alors que les disques de friction 36 et disques de friction d'extrémité 36e de l'ensemble multi-disques 30 sont portés par le porte disques extérieur.

Dans l'exemple de réalisation de la Figure 4 les disques d'embrayage 35 de l'ensemble multi-disques 30 sont reliés au porte disques extérieur et les disques de friction 36 ainsi que les disques de friction d'extrémité 36e de l'ensemble multi-disques 30 sont portés par le porte disques intérieur.

Dans l'exemple de réalisation de la Figure 5 les disques d'embrayage 35 de l'ensemble multi-disques 30 sont portés par le porte disques intérieur, et les disques de friction 36 de l'ensemble multi-disques 30 sont portés par le porte disques extérieur Le module d'embrayage comporte un ressort d'entretoisement 60 entre chaque paire de disques d'embrayage 35 adjacents.

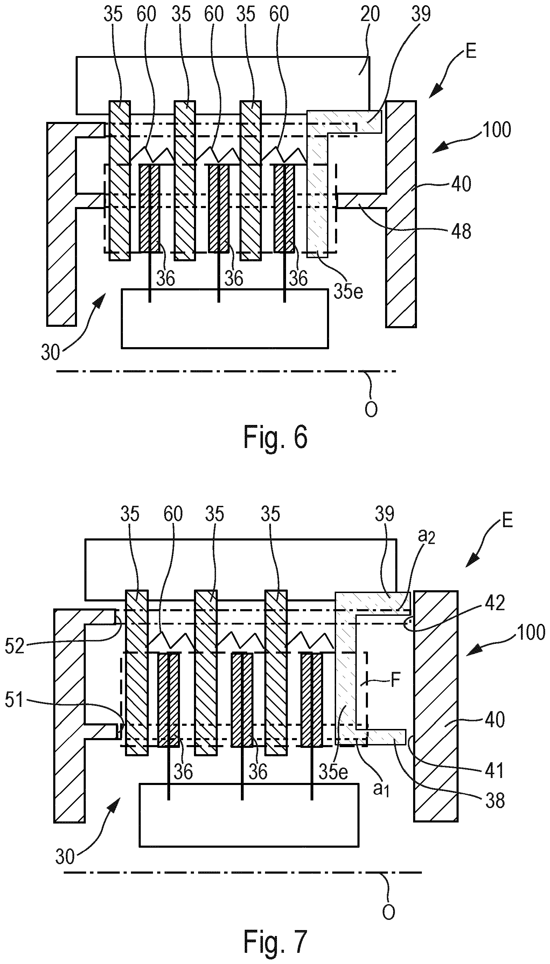

Le disque d'embrayage d'extrémité 35e de l'ensemble multidisque 30 illustré Figure 6 comporte une couronne 38 située en périphérie extérieure du disque d'embrayage d'extrémité 35e. La couronne 38 peut être continue ou non selon les variantes.

Le disque d'embrayage d'extrémité 35e de l'ensemble multidisque 30 illustré Figure 7 comporte également une couronne circulaire 38. Dans cet exemple la couronne 38 coopère avec une première zone d'appui a1 de l'organe de transmission de force 40.

Dans cet exemple, le disque d'embrayage d'extrémité 35e comporte également dans sa périphérie extérieure une pluralité de pattes 39. Les pattes 39 sont en particulier orientées axialement comme illustrés. Elles sont ici au nombre de 20. Les pattes 39 sont réparties régulièrement ou non autour de l'axe O.

## Revendications

1. Module d'embrayage (100) mobile en rotation autour d'un axe de rotation (O) et comprenant :
- au moins un ensemble multi-disques (30, 31) d'un embrayage (E, E1), l'ensemble multi-disques comportant plusieurs disques d'embrayage (35) et plusieurs disques de friction (36) agencés pour coopérer entre eux.
- au moins un ressort d'entretoisement (60) positionné axialement entre deux disques d'embrayage (35) ou entre deux disques de friction (36)
- un porte-disques (20,21) d'entrée de couple, et
- un organe de transmission de force (40) configuré pour exercer une pression sur l'ensemble multi-disques au niveau d'une première zone d'appui (*a₁*) et d'au moins une deuxième zone d'appui (*a₂*), **caractérisé par le fait que**
le au moins un ressort d'entretoisement étant positionné radialement entre la première zone d'appui (*a₁*) et la au moins deuxième zone d'appui (*a₂*).

2. Module d'embrayage selon la revendication 1, tel que les disques d'embrayage (35) et les disques de friction (36) définissent une zone de friction (*F*), et l'une des première zone d'appui (*a₁*) ou deuxième zone d'appui (*a₂*) se situe radialement en-dehors de la zone de friction (*F*).

3. Module d'embrayage selon la revendication 1 ou 2, tel que la première zone d'appui (*a₁*) et/ou la deuxième zone d'appui (*a₂*) sont agencées pour coopérer avec un appui (41, 42) de l'organe de transmission de force (40) et/ou un contre-appui (51, 52) du module d'embrayage (100).

4. Module d'embrayage selon l'une quelconque des revendications précédentes, tel que la deuxième zone d'appui (*a₂*) est radialement disposée au niveau d'une denture (25) du porte-disques (20,21) d'entrée de couple.

5. Module d'embrayage selon la revendication précédente, l'organe de transmission de force (40) comportant au moins une couronne (48), continue ou discontinue, en particulier cannelée, formant au moins en partie le premier ou deuxième appui (41, 42).

6. Module d'embrayage selon l'une quelconque des revendications précédentes dépendante de la revendication 3, l'organe de transmission de force (40) comportant au moins un doigt (45) formant au moins en partie le premier ou deuxième appui (41, 42).

7. Module d'embrayage selon la revendication précédente, le au moins un doigt (45) traverse le porte-disques (20,21) d'entrée de couple notamment au niveau d'au-moins une ouverture (24) pratiquée sur un flanc radial (26) du porte-disques d'entrée.

8. Module d'embrayage selon l'une quelconque des revendications précédentes, la au moins deuxième zone d'appui (*a₂*) étant située radialement au niveau d'un élément de fixation (70), notamment d'une dent (75), d'un disque d'embrayage (35) ou au niveau d'un élément de fixation (70), notamment d'une dent (75), d'un disque de friction (36).

9. Module d'embrayage selon l'une quelconque des revendications précédentes, au moins un disque d'embrayage (35), voire tous les disque d'embrayage (35), étant positionnés en dehors de l'une au moins des première zone d'appui (*a₁*) et deuxième zone d'appui (*a₂*).

10. Module d'embrayage selon l'une quelconque des revendications précédentes, au moins un disque de friction (36), voire tous les disques de friction (36), étant positionnés en dehors de l'une au moins des première zone d'appui (*a₁*) et deuxième zone d'appui (*a₂*).

11. Module d'embrayage selon l'une quelconque des revendications précédentes, comportant plusieurs ensembles multi-disques (30, 31).

12. Module d'embrayage selon l'une quelconque des revendications précédentes, le ou au moins un embrayage (E, E1) étant un embrayage humide.

13. Module d'embrayage selon l'une quelconque des revendications précédentes, le ou au moins un des embrayages (E, E1) étant un embrayage à sec.

## Patentansprüche

1. Kupplungsmodul (100), welches um eine Drehachse (O) drehbeweglich ist und umfasst:
- mindestens eine Mehrscheibenanordnung (30, 31) einer Kupplung (E, E1), wobei die Mehrscheibenanordnung mehrere Kupplungsscheiben (35) und mehrere Reibscheiben (36) aufweist, die dafür eingerichtet sind zusammenzuwirken,
- mindestens eine Distanzfeder (60), die axial zwischen zwei Kupplungsscheiben (35) oder zwischen zwei Reibscheiben (36) positioniert ist,
- einen Drehmomenteingangs-Lamellenträger (20,21) und
- ein Kraftübertragungsorgan (40), das dafür ausgelegt ist, an einem ersten Stützbereich (*a₁*) und mindestens einem zweiten Stützbereich (*a₂*) einen Druck auf die Mehrscheibenanordnung auszuüben, **dadurch gekennzeichnet, dass**
die mindestens eine Distanzfeder radial zwischen dem ersten Stützbereich (*a₁*) und dem mindestens einen zweiten Stützbereich (*a₂*) positioniert ist.

2. Kupplungsmodul nach Anspruch 1, wobei die Kupplungsscheiben (35) und die Reibscheiben (36) einen Reibbereich (*F*) definieren und einer von dem ersten Stützbereich (*a₁*) und dem zweiten Stützbereich (*a₂*) sich radial außerhalb des Reibbereichs (*F*) befindet.

3. Kupplungsmodul nach Anspruch 1 oder 2, wobei der erste Stützbereich (*a₁*) und/oder der zweite Stützbereich (*a₂*) dafür eingerichtet sind, mit einem Auflager (41, 42) des Kraftübertragungsorgans (40) und/oder einem Widerlager (51, 52) des Kupplungsmoduls (100) zusammenzuwirken.

4. Kupplungsmodul nach einem der vorhergehenden Ansprüche, wobei der zweite Stützbereich (*a₂*) radial an einer Verzahnung (25) des Drehmomenteingangs-Lamellenträgers (20,21) angeordnet ist.

5. Kupplungsmodul nach dem vorhergehenden Anspruch, wobei das Kraftübertragungsorgan (40) mindestens einen durchgehenden oder nicht durchgehenden, insbesondere gerillten Kranz (48) aufweist, der wenigstens teilweise das erste oder zweite Auflager (41, 42) bildet.

6. Kupplungsmodul nach einem der vorhergehenden Ansprüche, wenn abhängig von Anspruch 3, wobei das Kraftübertragungsorgan (40) mindestens einen Finger (45) aufweist, der wenigstens teilweise das erste oder zweite Auflager (41, 42) bildet.

7. Kupplungsmodul nach dem vorhergehenden Anspruch, wobei der mindestens eine Finger (45) den Drehmomenteingangs-Lamellenträger (20,21) insbesondere an mindestens einer Öffnung (24) durchquert, die an einer radialen Flanke (26) des Eingangslamellenträgers ausgebildet ist.

8. Kupplungsmodul nach einem der vorhergehenden Ansprüche, wobei sich der mindestens eine zweite Stützbereich (*a₂*) radial an einem Befestigungselement (70), insbesondere einem Zahn (75), einer Kupplungsscheibe (35) oder an einem Befestigungselement (70), insbesondere einem Zahn (75), einer Reibscheibe (36) befindet.

9. Kupplungsmodul nach einem der vorhergehenden Ansprüche, wobei mindestens eine Kupplungsscheibe (35) oder sogar alle Kupplungsscheiben (35) außerhalb des mindestens einen von dem ersten Stützbereich (*a₁*) und dem zweiten Stützbereich (*a₂*) positioniert sind.

10. Kupplungsmodul nach einem der vorhergehenden Ansprüche, wobei mindestens eine Reibscheibe (36) oder sogar alle Reibscheiben (36) außerhalb des mindestens einen von dem ersten Stützbereich (*a₁*) und dem zweiten Stützbereich (*a₂*) positioniert sind.

11. Kupplungsmodul nach einem der vorhergehenden Ansprüche, welcher mehrere Mehrscheibenanordnungen (30, 31) aufweist.

12. Kupplungsmodul nach einem der vorhergehenden Ansprüche, wobei die oder mindestens eine Kupplung (E, E1) eine Nasskupplung ist.

13. Kupplungsmodul nach einem der vorhergehenden Ansprüche, wobei die oder mindestens eine der Kupplungen (E, E1) eine Trockenkupplung ist.

## Claims

1. Clutch module (100) movable in rotation about an axis of rotation (O) and comprising:
- at least one multi-disc assembly (30, 31) of a clutch (E, E1), the multi-disc assembly comprising a plurality of clutch discs (35) and a plurality of friction discs (36) arranged to cooperate with one another,
- at least one spacing spring (60) positioned axially between two clutch discs (35) or between two friction discs (36),
- a torque input disc carrier (20, 21), and
- a force transmission member (40) configured to exert a pressure on the multi-disc assembly at a first bearing zone (*a₁*) and at at least one second bearing zone (*a₂*), **characterized in that**
the at least one spacing spring is positioned radially between the first bearing zone (*a₁*) and the at least one second bearing zone (*a₂*).

2. Clutch module according to Claim 1, such that the clutch discs (35) and the friction discs (36) define a friction zone (*F*), and one of the first bearing zone (*a₁*) and second bearing zone (*a₂*) is situated radially outside the friction zone (*F*).

3. Clutch module according to Claim 1 or 2, such that the first bearing zone (*a₁*) and/or the second bearing zone (*a₂*) are arranged to cooperate with a bearing point (41, 42) of the force transmission member (40) and/or a counter-bearing point (51, 52) of the clutch module (100) .

4. Clutch module according to any one of the preceding claims, such that the second bearing zone (*a₂*) is radially disposed at a toothing (25) of the torque input disc carrier (20, 21).

5. Clutch module according to the preceding claim, the force transmission member (40) comprising at least one ring (48), which is continuous or discontinuous, in particular splined, forming at least in part the first or second bearing point (41, 42).

6. Clutch module according to any one of the preceding claims dependent on Claim 3, the force transmission member (40) comprising at least one finger (45) forming at least in part the first or second bearing point (41, 42) .

7. Clutch module according to the preceding claim, the at least one finger (45) passing through the torque input disc carrier (20, 21) in particular at at least one opening (24) made in a radial flank (26) of the input disc carrier.

8. Clutch module according to any one of the preceding claims, the at least one second bearing zone (*a₂*) being situated radially at a fixing element (70), in particular a tooth (75), of a clutch disc (35) or at a fixing element (70), in particular a tooth (75), of a friction disc (36) .

9. Clutch module according to any one of the preceding claims, at least one clutch disc (35), or even all of the clutch discs (35), being positioned outside at least one of the first bearing zone (*a₁*) and second bearing zone (*a₂*).

10. Clutch module according to any one of the preceding claims, at least one friction disc (36), or even all of the friction discs (36), being positioned outside at least one of the first bearing zone (*a₁*) and second bearing zone (*a₂*).

11. Clutch module according to any one of the preceding claims, comprising a plurality of multi-disc assemblies (30, 31).

12. Clutch module according to any one of the preceding claims, the or at least one clutch (E, E1) being a wet clutch.

13. Clutch module according to any one of the preceding claims, the or at least one of the clutches (E, E1) being a dry clutch.
